# EUROPEAN PATENT APPLICATION

(11) **EP 1 457 377 A1**
(43) Date of publication of application: **15.09.2004**
(21) Application number: 04005255.7
(22) Date of filing: 05.03.2004
(51) Int. Cl.: B60K 6/12, F01B 1/06

(54) **An engine/pump of a pneumatic type for motor vehicles, a propulsion system including this engine, and a motor vehicle using this system**

(30) Priority: 12.03.2003 IT TO20030184
(71) Applicant: Sista Evoluzione Srl, 10125 Torino (IT)
(72) Inventor: Morelli, Alberto, 10131 Torino (IT)
(74) Representative: Notaro, Giancarlo

(57) **Abstract**

Described herein is an engine/pump of a pneumatic type, having a stator (BA) with radial cylinders, within which there can slide respective pistons (P), each carrying a roller (RO) that engages an annular cam (CM) carried by a rotor. A guide system forces each piston to move, maintaining its axis rigorously aligned with the axis of the respective cylinder. The propulsion system that uses said engine includes high-pressure, medium-pressure and low-pressure tanks (AP; MP; BP), and an auxiliary engine (GB), which controls one or more compressors. A motor vehicle which uses the aforesaid system presents innovative peculiarities as regards construction and location of the tanks of pressurized air or gas, which are filled with spongy material, and also as regards construction of the accelerator and brake controls.

## Description

### BACKGROUND FIELD OF THE INVENTION

It is known that the reciprocating internal-combustion engine, which is universally adopted for propulsion of motor vehicles, provides global levels of efficiency that are markedly variable and particularly modest when this engine is "partialized", i.e., when, given the same r.p.m., it supplies to the shaft a torque reduced with respect to the maximum possible value. The maximum possible value corresponds to the conditions of so-called "full-throttle" intake. But if the intake duct is "choked", the pressure is reduced to the minimum operating value, at which the torque supplied by the gases is the one necessary for compensating the mechanical losses in conditions of loadless turning of the engine, i.e., without useful torque exerted on the shaft. In these conditions, the efficiency is zero, and the consumption is also minimum but persists with values of the order of one litre of fuel per hour in the case of automobiles. Between these conditions and the conditions of maximum intake, the levels of efficiency range from zero to a maximum, which in the case of currently available engines can reach 30%-40%. However, not infrequently the efficiency with which the engine supplies its power in certain running conditions, e.g., when the vehicle is in town traffic, is just a few percent, even less than 10% of the maximum efficiency. In these conditions, there is no great interest in increasing the maximum efficiency of the engine, even though the potentiality of such an increase does exist: some reciprocating marine engines reach an efficiency of 60%.

A solution designed to improve the energy balance envisages the accumulation of the energy generated in conditions of high efficiency and its return for use, also with a high efficiency. This is the concept underlying operation of electric vehicles. However, the cycle of charging and discharging of the electrical accumulators (the so-called batteries) is not free from losses, especially in the case of rapid charging and discharging. A typical value can be 70% both as regards charging and as regards discharging, with the global result of a loss of approximately 50%, which is a highly penalizing value.

Much higher values of efficiency are obtained with gas tanks or gas cylinders under pressure and appropriately insulated thermally. This is the case of tanks or cylinders that contain compressed air and are filled with particular foams and that have open cells, which function as heat sinks by accumulating and returning the thermal energy of the gas during its variations in pressure. The levels of efficiency achieved are higher than 90% in the entire cycle of charging and discharging.

### OBJECT OF THE INVENTION

A purpose of the present invention is to propose a new engine/pump of a pneumatic type, both for accumulation of energy and for transformation of this accumulated energy into work of locomotion.

A further purpose of the invention is to provide a new propulsion system that includes the engine according to the invention, as well as a high-efficiency generator of pneumatic energy, preferably set on board the vehicle.

Yet a further purpose of the present invention is to provide a propulsion system capable of recovering, at a high rate, the reversible potential energy (gravitational energy and kinetic energy) of the vehicle as it is travelling.

Yet a further purpose of the invention is to provide a motor vehicle which uses the propulsion system according to the invention, in which the space for the tanks forming part of the system is exploited in the best possible way.

### SUMMARY OF THE INVENTION

With a view to achieving the above and further purposes, the subject of the present invention is an engine/pump according to the annexed Claim 1. The subject of the invention is also a motor vehicle as defined in Claim 8, and a propulsion system as defined in Claim 10. Further preferred and advantageous characteristics of the engine/pump, of the motor vehicle, and of the propulsion system according to the invention are defined in the dependent claims.

### BRIEF DESCRIPTION OF THE DRAWINGS

Further characteristics and advantages of the invention will emerge from the ensuing description with reference to the annexed drawings, which are provided purely by way of non-limiting example, and in which:
- Figure 1 is a diagram of a preferred embodiment of the invention;
- Figure 2 is a schematic perspective illustration of a motor vehicle which uses the propulsion system according to the invention, in which visible in detail is a reticular structure, integrated in the floor panel, which is exploited to obtain the tanks forming part of the system;
- Figures 3 and 4 are a side view and a plan view, respectively, of the motor vehicle of Figure 2;
- Figure 5 is a cross-sectional view at an enlarged scale of a detail of the connection of the structure exploited as tank to the body of the motor vehicle;
- Figure 6 is a cross-sectional view, in the plane passing through the axes of the wheel and of one of the cylinders, of a preferred embodiment of the engine/pump according to the invention;
- Figure 6A illustrates a detail at an enlarged scale of a seal on a piston of the engine/pump;
- Figure 7 illustrates a cross section of the same engine in the plane passing through the axes of some contiguous cylinders;
- Figure 8 illustrates a cylinder as viewed in the direction of its axis, according to the line X-X of Figure 7; and
- Figures 9, 10 and 11 illustrate diagrams corresponding to the operation of the engine/pump according to the invention.

### DETAILED DESCRIPTION OF THE INVENTION

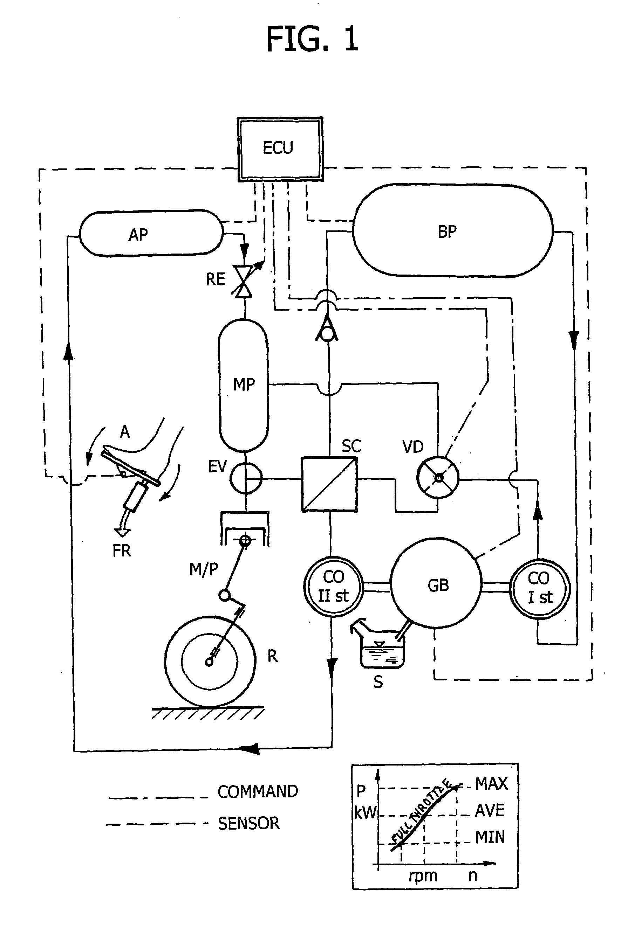

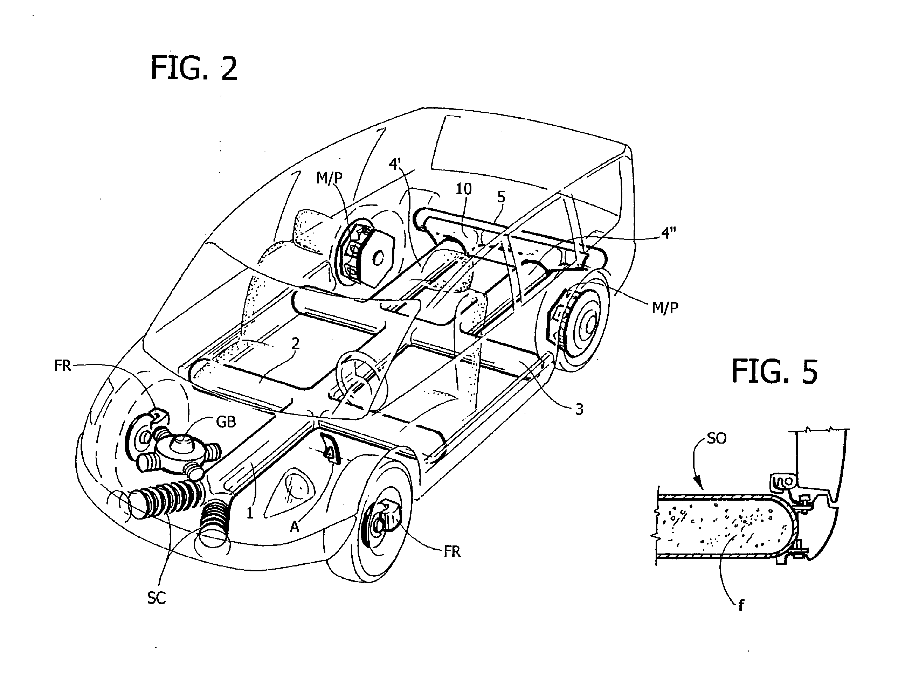

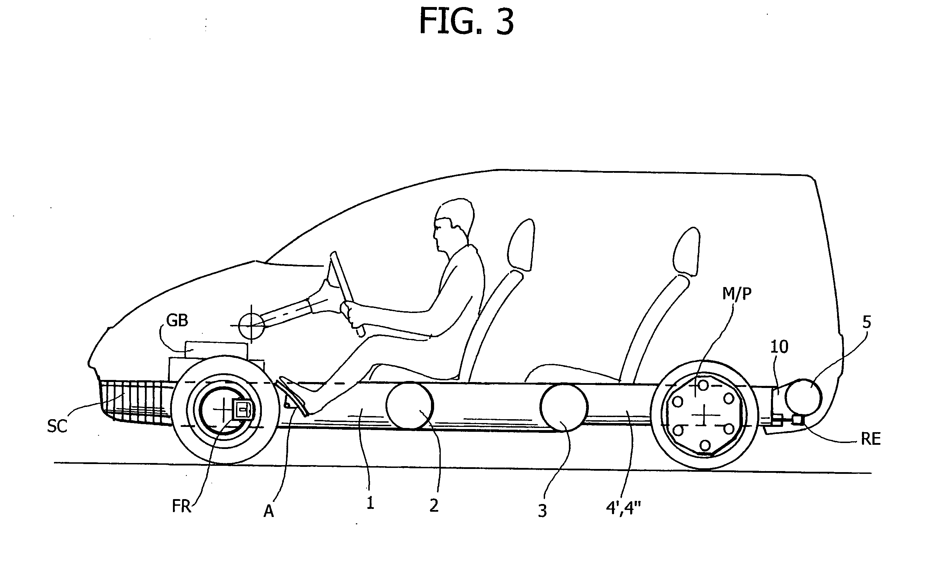

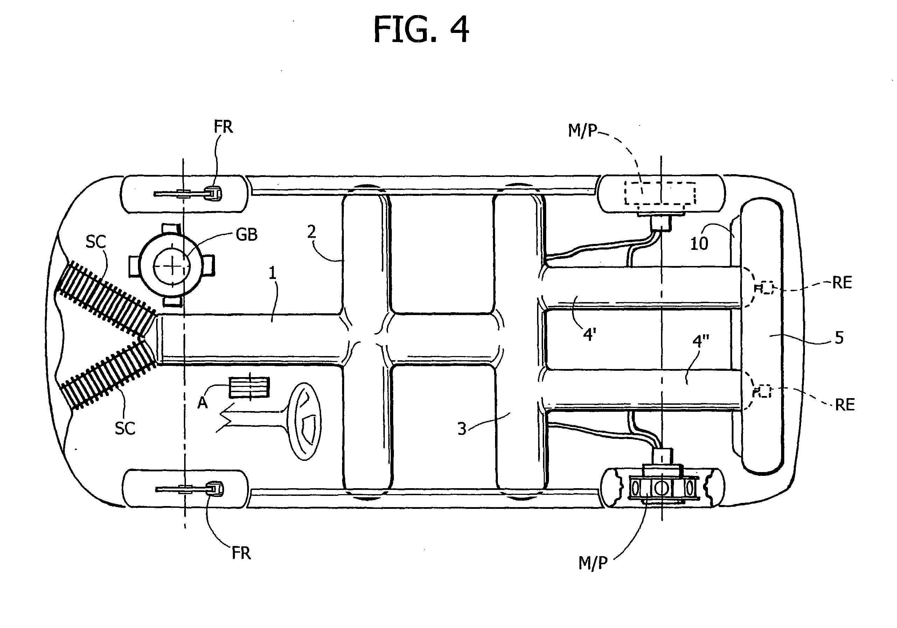

With reference to the diagram of Figure 1, illustrated therein is a propulsion system for a motor vehicle according to the invention. The references AP, MP and BP designate a high-pressure tank, a medium-pressure tanks and a low-pressure tank, respectively. In its application to an average automobile, the order of magnitude of the internal volumes of the tanks is of tens of litres for the first two types and of hundreds of litres for the low-pressure tank, roughly 300 litres. The latter considerable volume, but preferably also the volumes of the medium-pressure tank and/or the high-pressure tank, is obtained, in the preferred embodiment, inside elements which also perform structural functions, such as the elements 1, 2, 3, 4', 4" (see Figures 2-4) of a reticular structure integrated in the floor panel of the motor vehicle. In particular, Figure 2 shows clearly in a perspective view the reticular structure integrated in the floor panel of the automobile, with beam structures 1, 2, 3, 4', 4", having a box-like conformation, i.e., having a closed section, which are also used as pressure tanks. The tank beams are also clearly visible in Figures 3, 4, which illustrate, respectively, a longitudinal side view and a plan view of the vehicle. The elements 1, 2 and 3 are exploited as intercommunicating low-pressure tanks. The elements 4'and 4" constitute two medium-pressure tanks. The high-pressure tank is formed by an element 5 carried by an auxiliary structural element 10, preferably in a removable way.

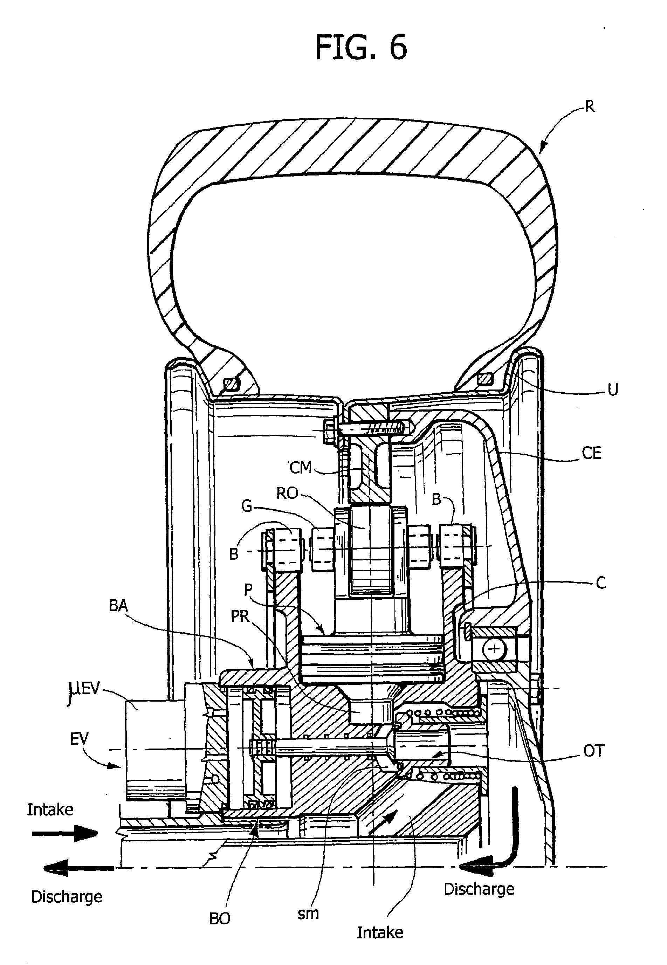

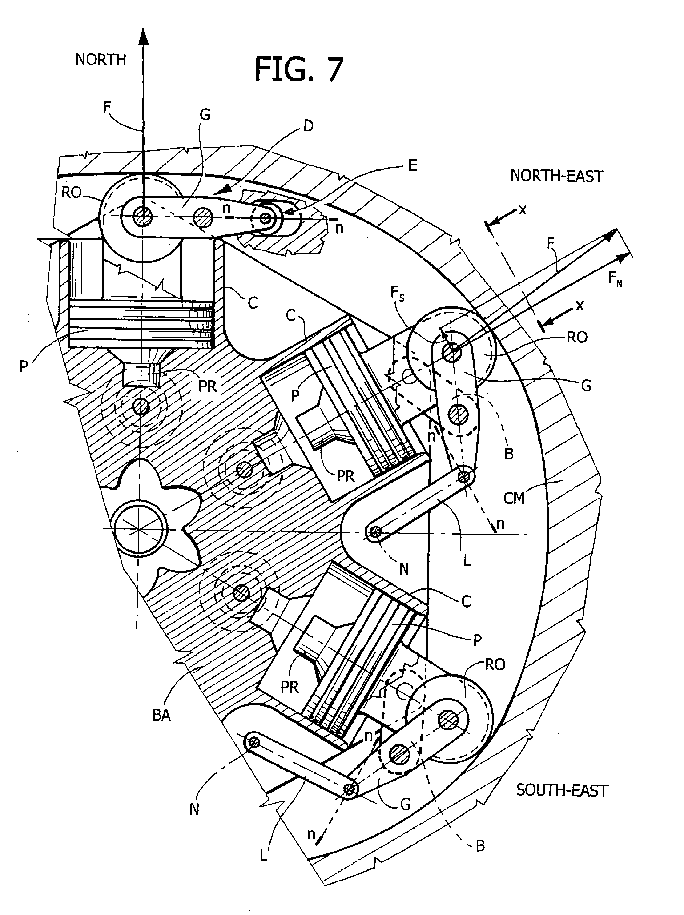

A characteristic common to all the aforesaid tanks is that of being preferably filled with a foam f having open cells (see Figure 5), e.g., of the polyurethane type, with a geometry and a specific weight such as to fulfil the important function of rendering practically isothermal the thermodynamic transformations of the operating gas (preferably nitrogen or air) of the propulsion system in the various phases of operation, as described in what follows.

The tank beams 1-5 are preferably made of a composite material, such as a polyester or epoxy resin reinforced with glass or aramidic or carbon fibre ("kevlar") according to the performance required (carbon is preferred for high pressures, whilst glass is sufficient for low pressures). This type of construction is preferably adopted also because there can be easily provided the connections to the conventional structure of the body of the vehicle, as indicated, for example, in the detail designated by SO in Figure 2.

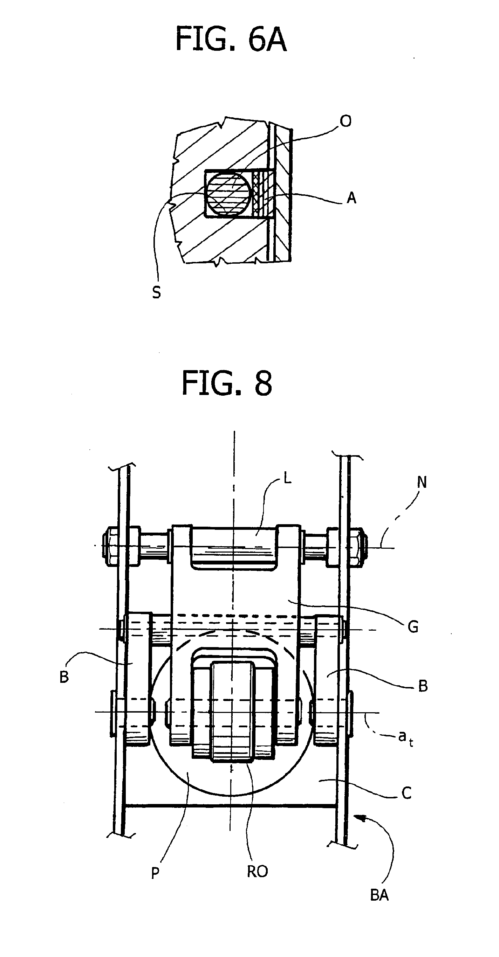

To return to Figure 1, of considerable importance in the invention is the pneumatic actuator (engine/pump) M/P, which supplies/receives mechanical energy to/from the wheels to which it is connected via a particularly innovative crank mechanism. A preferred configuration of the actuator is provided in Figures 6-8. Figure 6 is a partial cross-sectional view in the plane passing through the axes of the wheel and of one of the cylinders. Figure 7 is a partial cross-sectional view in the plane containing the axes of the cylinders, (which, in the preferred example illustrated, are arranged so as to form a star). Figure 8 is a view, according to the line X-X of Figure 7, of a cylinder as viewed in the direction of its axis.

The device obtained comprises a stator defining one or more radial cylinders C, in each of which is slidably mounted in a fluid-tight way a piston P, which defines, in the cylinder, a chamber supplied with a gas or air under pressure. A rotor in the form of an annular cam CM surrounds the stator and co-operates with a cam-follower roller RO carried by each piston P, for the purpose of transforming the reciprocating movement of the pistons caused by the pressurized fluid into a rotational movement of the annular cam, in the case of operation as an engine, or of performing the reverse transformation of rotation of the annular cam into the reciprocating motion of the pistons, in the case of operation as a pump.

Particular attention has been paid to the seal device on each piston, which is preferably of the type illustrated in Figure 6A, comprising a continuous ring A housed in a seat S of the piston P and pushed to adhere to the surface of the cylinder C thanks to the interposition of a ring O of the O-ring type.

The crank mechanism for transformation of the reciprocating motion of each piston into a rotational motion of the driven member (i.e., a transmission shaft or directly a wheel of the motor vehicle) comprises the roller RO carried by each piston and the cam CM engaged thereby. The cam is preferably fixed to the driving wheel itself, designated by R, the rim of which is designated by U.

The above configuration enables a differentiation of the angle of rotation of the engine shaft (i.e., of the wheel, in the case exemplified) during the "active" travel of each piston, i.e., the stroke from the top dead centre (TDC) to the bottom dead centre (BDC), with respect to the angle of rotation during the "passive" stroke, i.e., from the BDC to the TDC. In fact, whereas in traditional centred crank mechanisms the passage from TDC to BDC corresponds to a rotation through 180°, in the case of the roller-and-cam crank mechanism described above, nothing prevents positioning of the BDC at a different angle, e.g., at 240° of rotation of the wheel with respect to the TDC, to obtain an active stroke corresponding to 2/3 of full circle. Consequently, the passive stroke is reduced to 1/3 of a turn. Both the choice of the ratio between the active stroke and the passive stroke and the laws of motion of the pistons are widely variable at the design stage, but preferably said laws will be of a harmonic type, albeit even having different periods. In general, a longer active stroke is preferred because a higher specific power of the engine corresponds to a longer duration.

Another advantage that can be achieved concerns the distribution system (i.e., the system for controlling communication of the chamber of each cylinder with the supply of pressurized fluid and with the exhaust), in which the phases of intake and discharge of the gas can have, for instance, durations that are approximately the same as one another. There is thus an increase in the duration of the phase that would otherwise be shorter, i.e., the intake phase (see the example provided in what follows), and hence this phase proves to be more difficult to obtain. It is to be borne in mind, in this regard, that another important characteristic of the invention lies in the electronic management (variable valve timing - VVT) of the distribution.

Since the roller-cam contact generates a lateral thrust Fs (see Figure 7) that goes to zero only at the dead centres, i.e., at the points of end-of-stroke, the invention envisages a device D of an epicyclical type for balancing said thrust and for ensuring moreover that the piston will perform a rectilinear translational motion coaxial with the cylinder. In the example illustrated, the device D consists of two connecting rods B set at the two sides of each roller RO, which perform a motion on planes parallel to the median plane of the roller (said median plane passes preferably through the axis of the cylinder). Each of the connecting rods B is hinged, at one end, to the cylinder according to a transverse axis at (see Figure 8) passing through the axis of the cylinder itself and, at the other end, to the medium point of a "yoke" G (in the example illustrated, a rocker having an H-like conformation, as visible in Figure 8) with opposed arms that have the same length, the end hinges of which are, on one side, connected to the piston P along the axis of the roller RO and, on the other, to a carriage E constrained so as to translate in a direction n-n (see the cylinder in the top position in Figure 7), perpendicular to the axis of the cylinder. Thanks to said kinematic mechanism, the motion of the piston is a rectilinear translational movement along the axis thereof, provided that the length of the arms of the yoke or rocker (i.e., the distances of its intermediate fulcrum from the end articulations) are the same as that of the connecting rod B, which is, in fact, the case.

For the purpose of preventing prismatic coupling of the carriage E, an alternative, non-rigorous, but sufficiently approximate solution of the carriage envisages connection of the yoke to a small oscillating connecting rod L on average directed parallel to the axis of the cylinder (see the cylinders in the positions top right and bottom left in Figure 7), simply hinged, at one end, to the yoke and, at the other end, to the body of the cylinder (engine base, BA). A characteristic of the yoke G and the connecting rod L is that they are hinged together with a pin that is sufficiently long to prevent excessive warpage, albeit elastic, of the yoke G and of the connecting rod L. For the same reason, hinging of the connecting rod L to the engine base BA is also obtained with a long pin N. In this way, any danger of the piston skirt sliding on the cylinder is obviated. The piston thus proves to be as if it were "hung" from the centre of the wheel and guided by the seal gaskets to move co-axially with respect to the cylinder, forming in this way a piston-cylinder coupling that is effective both as regards gas tightness and as regards good mechanical efficiency.

To return to Figure 1, starting from AP and following the arrows appearing along the solid lines, there is followed a work cycle in which energy is supplied to the wheels. It may be noted how the gas passes into the medium-pressure tank MP before supplying the engine/pump actuator M/P to transform the pneumatic energy into mechanical work of the wheel/wheels R. Said passage of gas is regulated by the regulator RE which, by bringing about in part a lamination of the gas itself, causes a loss of energy, albeit reduced thanks to the presence of the foam in the tanks, as has already been said. In order to render said losses small, the medium-pressure tanks PM are set very close both to the high-pressure tank AP and to the actuators M/P. However, said passage of gas into an intermediate tank can be omitted, and the gas can be sent into the actuator directly from the high-pressure tank AP. This solution is preferred in those cases where it can be applied, either on account of the possibly non-excessive value chosen for the high pressure or on account of the sufficient resistance of the actuator to the consequent thermal and mechanical stresses. In this way, the solution is simplified and less costly but, given the same volume of the tank AP, since it is not possible to adopt very high pressures, the energy accumulated is reduced. On the other hand, as is known, the energy accumulated must be of an amount sufficient to make up, as far as possible, for the instantaneous power needs (the so-called "power peaks") for the time required by the running cycle of the vehicle. If it is not always possible to satisfy totally said requirement, the performance of the vehicle decreases accordingly.

The distribution of gas to the actuator is activated preferably by an electro-pneumatic servo-valve EV. To enable a fast speed of response upon command, this preferably consists of a pilot micro-solenoid valve µEV (see Figure 6) associated to a booster BO and driven by a common encoder (not visible in the drawings), which reads the angular position of the engine shaft and issues the opening and closing signals for intake and discharge of gas to/from the actuator M/P, in both of its functions, namely, as engine M and as pump P.

Said functions are obtained by the driver of the vehicle preferably by pressing on the accelerator pedal A in either of the two directions indicated in the diagram of Figure 1: MO (engine) drive, and PO (pump) braking. If the pedal is pushed further in the braking direction, conventional brakes FR are activated, which constitute also the compulsory emergency system. They are preferably housed in the non-driving wheels (see Figure 2).

The distribution system includes: an open/close element OT, with a neutral position and two end positions, in which the chamber of a respective cylinder is in communication with the supply of pressurized air or gas and, respectively, with the exhaust; the fluid cylinder BO, with a booster function, which controls the position of the open/close element OT; and a pilot solenoid valve EV, which controls supply of pressurized fluid to said booster cylinder (BO), to actuate it in one direction or in the other.

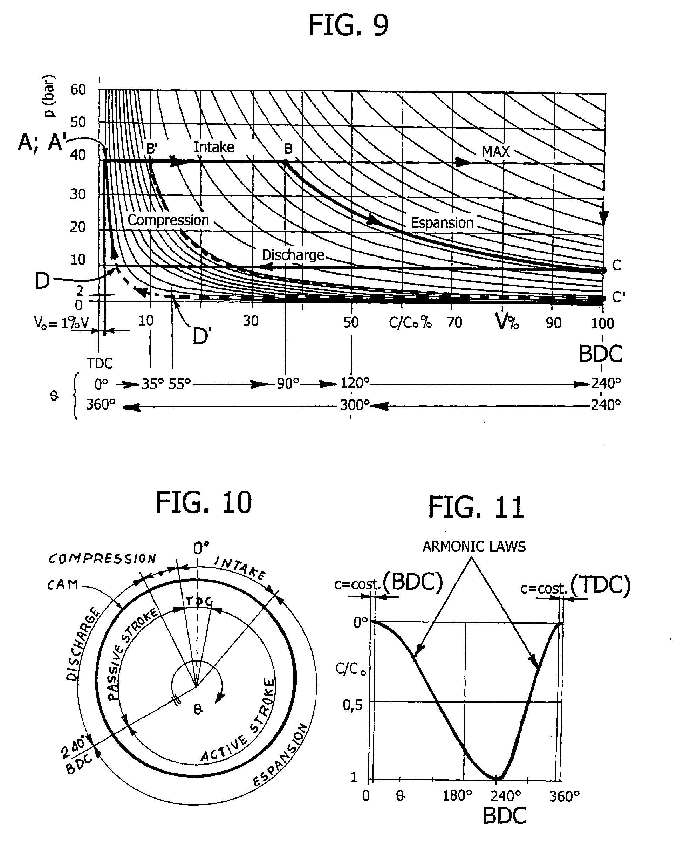

The work cycle of the gas is represented in Figure 9. The ordinate indicates the pressure of the gas; the abscissa indicates both the angle θ of the engine shaft, which is assumed equal to 0° at the top dead centre (TDC) and equal to 240° or a value close thereto - this value being preferable to 180° of traditional systems, as already mentioned previously - at the bottom dead centre (BDC), and the percentage stroke c/c₀ (which is also equal to the piston displacement V%), where c₀ is the total stroke.

By way of example, at point A there starts supply of gas from the medium-pressure tank MP (said pressure is assumed as being 40 bar), which is interrupted in B, after a rotation θ = 90°. Then the gas expands up to C, where it drops to a pressure of 10 bar, which is assumed as being the maximum possible pressure existing in the tank BP, and the active stroke (intake plus expansion) is thus completed. During the return stroke which starts at BDC with opening of the connection of the cylinder to the tank BP, the gas is here transferred, at a practically constant pressure, until TDC is almost reached, at which point the exhaust valve is closed (point D, corresponding to an angle θ in advance by 15° with respect to TDC), and there is activated, in the "dead space", which is inevitably non-zero, a phase of compression of the gas that has remained there up to the value of intake pressure (40 bar), at which gas is once again introduced by the tank MP. The dead space is evaluated in the example as being equal to 1% of the piston displacement V, but it is possible to make it smaller still by reducing as much as possible the volume sm determined by the movement of the open/close element OT (see Figure 6). A system devised for reducing the dead space is represented by the protuberance PR made on the top of the piston P (see Figures 6,7).

However, on account of the small volume of the "dead space", the value of end-of-compression cannot coincide with the intake pressure. In this case, the gas intake causes a shock on the crown of the piston with consequent unpleasant modulation of torque on the shaft (roughness, noise) if the latter is not exactly in a position corresponding to TDC. To prevent this effect, the cam is shaped so as to maintain the piston at TDC for a short time interval (circular shape of the cam, which is coaxial with the engine shaft, as illustrated in Figure 7, which represents schematically a cam that actuates just one stroke per revolution, the laws of motion during the active and passive phases of the stroke itself being shown in Fig. 11).

In the cycle of the previous example, the pressure of the tank BP is 10 bar but it could be smaller on account of the gas intake which the compressor CO is required to make in order to maintain the maximum pressure both in the tank MP and in the tank AP. By way of example, let said pressure be 2 bar. The cycle of utilization of the gas is thus modified into A' B' C' D' of Figure 9, with appropriate variation of the angles θ of opening and closing of the solenoid valve. In fact, appropriate gas-pressure sensors for detecting the pressure in the tanks supply signals to an electronic control unit ECU (see Figure 1), which has the job of automatic management both of the levels of pneumatic energy in the tanks and of the power of the on-board generator GB, which, according to the invention, is constituted by a reciprocating engine regulated to operate according to a "stop & go" criterion but always in conditions of maximum efficiency given the same r.p.m. of operation. On the other hand, since the medium power required by operation of the vehicle varies considerably, the rate of turning of the internal-combustion engine envisaged will vary accordingly (see the power/r.p.m diagram associated to the diagram of Figure 1).

As has been said, the gas, after performing its working cycle, passes into the low-pressure tank BP. From here, it is set again in circulation by being recompressed in the high-pressure tank AP by the compressor CO, which is generally made up of a number of stages. Indicated in the diagram of Figure 1 are two compression stages, designated by Ist and IIst, between which there is provided a step of cooling of the gas performed by the heat exchangers SC (indicated in Figure 2), the activation of which by the deviator VD is determined by the aforesaid electronic control unit ECU, according to the inputs of the sensors, which provide information on the state of charge of the extreme-pressure tanks AP and BP. The electronic control unit ECU moreover decides the regime of operation of the generator GB also according to the position-time product assumed by the stroke-regulation pedal A (accelerator).

Fig. 2 shows the auxiliary engine GB located in the front part of the motor-vehicle. However it is preferably located in the rear part, close to the high and medium pressure tanks.

## Claims

1. An engine/pump of a pneumatic type for motor vehicles comprising:
- a stator defining one or more radial cylinders (C), in each of which there is slidably mounted a piston (P) defining in the cylinder a chamber supplied with a gas or air under pressure; and
- a rotor in the form of an annular cam (CM), which surrounds the stator and co-operates with a cam-follower roller (RO) carried by each piston (P) for transforming the reciprocating movement of the pistons caused by the pressurized fluid into a rotational movement of the annular cam (CM), in the case of operation as engine, or for performing the reverse transformation of a rotation of the annular cam (CM) into the reciprocating movement of the pistons, in the case of operation as pump;
in which each piston (P) is connected to the structure of the stator (BA) by a system of guides, which forces the piston (P) to move maintaining the its axis rigorously aligned with the axis of the respective cylinder.

2. The pneumatic engine/pump according to Claim 1, **characterized in that** the aforesaid guide system associated to each piston comprises at least one connecting rod (B) having a first end, which is articulated to the stator (BA) about an axis that is parallel to the axis of said cam-follower roller (RO) and passes through the axis of the cylinder (C), and a yoke or rocker (G) having an intermediate portion pivoted on the second end of said connecting rod (B), one first end articulated to the piston (P) about the axis of the roller (RO), and the second end engaged by a guide element that forces it to move at least approximately along a rectilinear path (n-n) perpendicular to the axis of the cylinder (C).

3. The engine/pump according to Claim 2, **characterized in that** said guide element is constituted by a carriage guide device (E), for example of the pin-slit type.

4. The engine/pump according to Claim 2, **characterized in that** said guide element is constituted by an auxiliary connecting rod (L), which is set substantially parallel to the axis of the cylinder and has one end hinged to the stator (BA) and the opposite end articulated to the aforesaid second end of said yoke or rocker (G).

5. The pneumatic engine/pump according to Claim 2, **characterized in that** the distances of the axes of articulation of the two ends of said yoke or rocker (G) from the axis of the intermediate fulcrum are the same as one another and are moreover equal to the distance between the axes of articulation of the ends of said connecting rod (B).

6. The engine/pump according to Claim 1, **characterized in that** it comprises a plurality of cylinders (C) set radially, e.g., according to a star configuration.

7. The engine/pump according to Claim 1, in which the annular cam (CM) of the rotor is shaped so as to render different the duration of the "active" stroke from that of the "passive" stroke.

8. The engine/pump according to Claim 1, in which the annular cam (CM) of the rotor is shaped so as to impart to the reciprocating masses laws of motion which are harmonic or in any case diversified.

9. The engine/pump according to Claim 7, in which the piston (P) is maintained in the position of TDC for a short interval of angle of rotation of the engine shaft.

10. The engine/pump according to Claim 1, **characterized in that** it comprises a distribution system including:
an open/close element (OT), with a neutral position and two end positions in which the chamber of a respective cylinder is in communication with the supply of air or gas under pressure (and, respectively, with the discharge);
a fluid cylinder (BO) having the function of booster, which controls the position of the open/close element (OT); and
a pilot solenoid valve (EV), which controls supply of pressurized fluid to said booster cylinder (BO) to actuate it in one direction or in the other.

11. The engine/pump according to Claim 1, **characterized in that** it comprises an electronic control unit (ECU), which controls said solenoid valve (EV) in a variable way, according to one or more operating parameters of the engine.

12. A motor vehicle, **characterized in that** it comprises at least one engine according to one or more of the preceding claims.

13. The motor vehicle according to Claim 11, **characterized in that** the engine, or each engine, is integrated in a respective wheel of the motor vehicle, the annular cam (CM) of the engine being connected to the rim of the wheel.

14. A propulsion system for motor vehicles, **characterized in that** it comprises one or more engines according to one or more of Claims 1-11.

15. A propulsion system according to Claim 14, **characterized in that** it comprises one or more tanks of pressurized fluid (AP, MP, BP), for supplying pressurized fluid to said engine, as well as an auxiliary engine (GB), and one or more compressors (CO-Ist, CO-IIst) driven by said auxiliary engine (GB) in order to accumulate pressurized fluid within one or more of said tanks.

16. A propulsion system according to Claim 15, **characterized in that** it comprises: a low-pressure tank (BP), which receives the exhaust fluid from the engine/pump; a first stage of a compressor (CO-Ist) driven by the auxiliary engine (GB), which takes fluid from the low-pressure tank (BP), compresses it and feeds it to a medium-pressure tank (MP); and a second stage of a compressor (CO-IIst), which takes fluid from the medium-pressure tank (MP), compresses it and feeds it to a high-pressure tank (AP).

17. The propulsion system according to claim 16, **characterized in that** the auxiliary engine (GB) is located in proximity of at least one of the medium and high pressure tanks (MP, AP), **in that** inside said tanks a foam of expanded material is arranged performing as a heat exchange means, and **in that** the fluid is sent to said tanks by deviating means controlled by an electronic control unit.

18. The propulsion system according to Claim 16, **characterized in that** it comprises a heat exchanger (SC) for cooling the fluid set between the first compression stage and the second compression stage, and deviator means (VD) for deviating the fluid through said exchanger upon a command issued by said electronic control unit, according to pre-set parameters.

19. A motor vehicle according to Claim 12, **characterized in that** it envisages a single integrated "accelerator-brake" control with rocking pedal, which can be rotated in one direction to activate the accelerator function and in the opposite direction to activate the brake function, said brake function being obtained by causing the engine to function as brake, with a further activation up to end-of-travel of an emergency brake (FR) of a conventional type, which acts on the non-driving wheels.

20. The motor vehicle according to Claim 12, **characterized in that** it comprises a system of tanks (AP; MP; BP) formed in the beams (1, 2, 3, 4', 4") of a reticular beam structure, which is integrated in the flat bottom of the boot of the motor vehicle.

21. The motor vehicle according to Claim 20, **characterized in that** at least part of said tanks contains a spongy material (f).

22. The motor vehicle according to Claim 21, **characterized in that** the spongy material is a foam of expanded material with open cells.

23. The motor vehicle according to Claim 20, **characterized in that** it comprises a high-pressure tank (AP) connected, preferably in a removable way, to the structure of the motor vehicle.
